# EUROPEAN PATENT APPLICATION

(11) **EP 4 496 212 A1**
(43) Date of publication of application: **22.01.2025**
(21) Application number: 23796229.5
(22) Date of filing: 20.04.2023
(51) Int. Cl.: H02P 29/00, F04B 39/00, F04C 29/00, H02K 11/33

(54) **CONTROL SUBSTRATE FOR ELECTRIC COMPRESSOR AND ELECTRIC COMPRESSOR**

(30) Priority: 26.04.2022 JP 2022072407
(71) Applicant: MITSUBISHI HEAVY INDUSTRIES THERMAL SYSTEMS, LTD., Tokyo 100-8332 (JP)
(72) Inventor: HATTORI, Makoto, Tokyo 100-8332 (JP); MURASE, Goki, Tokyo 100-8332 (JP)
(74) Representative: Cabinet Beau de Loménie
(86) International application number: PCT/JP2023/015739
(87) International publication number: WO 2023/210487

(57) **Abstract**

An object is to suppress vibration. The electric compressor includes: an electric motor; a compressor rotated by output of the electric motor; and a motor control device configured to perform drive control on the electric motor. The motor control device includes a control board (50) for controlling the electric compressor. The control board (50) is a multi-layer board including a first layer (50a) on which an insulating IC (51) is mounted and a fourth layer (50c) on which an insulating transformer (52) is mounted. The insulating IC (51) and the insulating transformer (52) are mounted so as to at least partially overlap with each other in planar view.

## Description

### [Technical Field]

The present disclosure relates to an electric compressor control board and an electric compressor.

### [Background Art]

As electric compressors, for example, electric compressors used for on-vehicle air conditioners or the like are known. For example, such an electric compressor has an electric motor, a compressor rotated by output of the electric motor, a housing accommodating the electric motor and the compressor, and a motor control device configured to perform drive control on the electric motor. The motor control device has a control board on which various electronic components for controlling the electric motor are mounted (for example, see Patent Literature 1).

### [Citation List]

### [Patent Literature]

[PTL 1]
Japanese Patent Application Laid-Open No. 2015-202699

### [Summary of Invention]

### [Technical Problem]

In electric compressors, rotational drive of a compressor causes a housing to vibrate. Since such vibration is also transmitted to a control board of a motor control device, some countermeasure against vibration is required to be taken on the control board.

The present disclosure has been made in view of such circumstances and intends to provide an electric compressor control board and an electric compressor that can suppress vibration.

### [Solution to Problem]

An electric compressor control board according to one aspect of the present disclosure is a multi-layer board including a first layer on which a first element is mounted and an n-th layer (n is an integer of two or greater) on which a second element is mounted, and the first element and the second element are mounted so as to at least partially overlap with each other in planar view.

An electric compressor according to one aspect of the present disclosure includes: an electric motor; a compressor rotated by output of the electric motor; and a motor control device configured to perform drive control on the electric motor, and the motor control device includes the electric compressor control board according to the above.

### [Advantageous Effects of Invention]

The electric compressor control board and the electric compressor according to the present disclosure achieve an advantageous effect that vibration can be suppressed.

### [Brief Description of Drawings]

[Fig. 1]

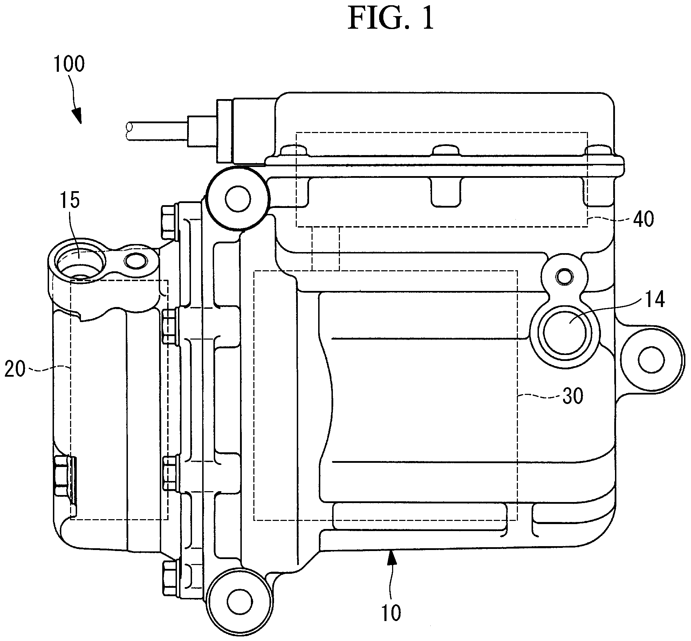

   Fig. 1 is a side view illustrating an electric compressor according to one embodiment of the present disclosure.
[Fig. 2]

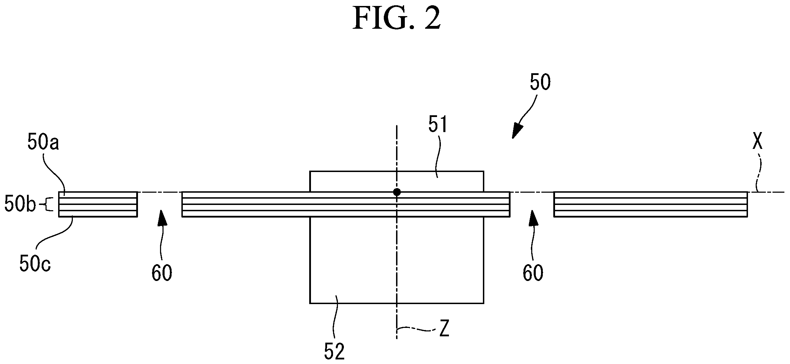

   Fig. 2 is a side view of a part of a control board according to one embodiment of the present disclosure when viewed in the Y-axis direction.
[Fig. 3]

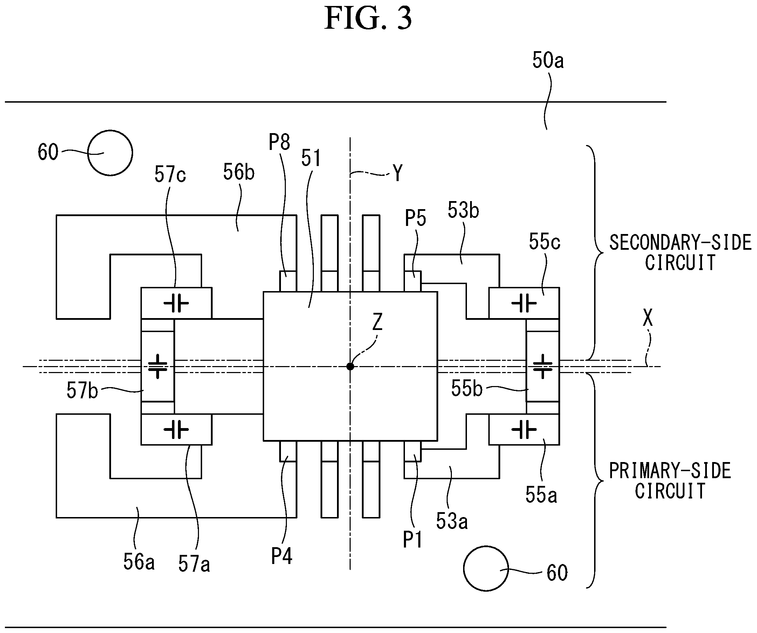

   Fig. 3 is a plan view of a first layer of the control board according to one embodiment of the present disclosure.
[Fig. 4]

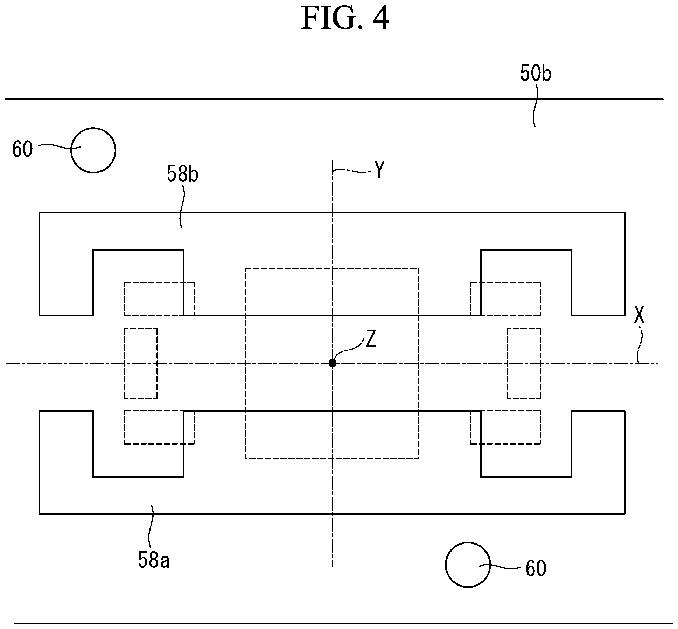

   Fig. 4 is a plan view of respective layers forming an intermediate layer of the control board according to one embodiment of the present disclosure.
[Fig. 5]

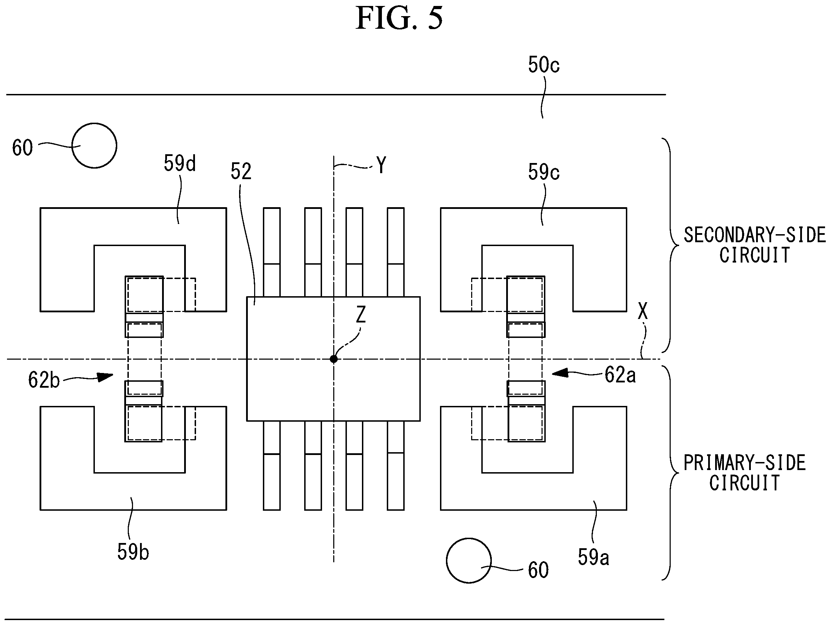

   Fig. 5 is a plan view of a fourth layer of the control board according to one embodiment of the present disclosure.
[Fig. 6]

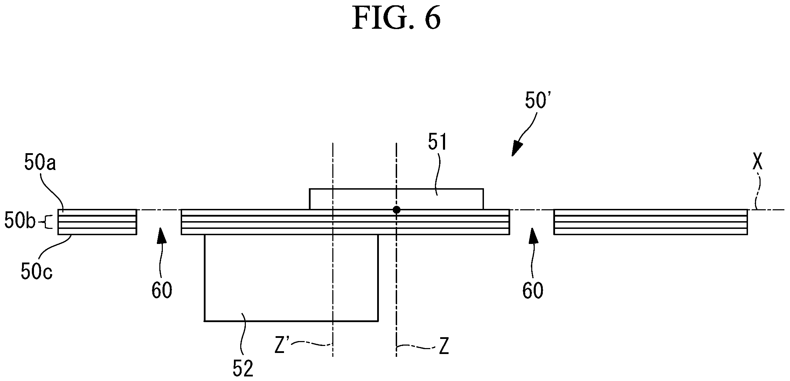

   Fig. 6 is a side view of a part of a control board according to another embodiment of the present disclosure when viewed in the Y-axis direction.

### [Description of Embodiments]

One embodiment of an electric compressor control board and an electric compressor according to the present disclosure will be described below with reference to the drawings.

Fig. 1 is a side view illustrating an electric compressor 100 according to one embodiment of the present disclosure. As illustrated in Fig. 1, the electric compressor 100 has a compressor 20, an electric motor 30 configured to drive the compressor 20, and a motor control device 40 configured to perform drive control on the electric motor.

The compressor 20, the electric motor 30, and the motor control device 40 are accommodated in a housing (casing) 10 forming a closed internal space. For example, the housing 10 is formed of an aluminum alloy. For example, the electric compressor 100 according to the present embodiment is used for on-vehicle air conditioners.

For example, a refrigerant intake port 14 for taking in a low-pressure refrigerant gas is provided to the housing 10. Further, a refrigerant ejection port 15 for externally ejecting a compressed refrigerant gas is provided to the housing 10.

The compressor 20 is a device configured to compress a low-pressure refrigerant gas taken in from the refrigerant intake port 14 to eject the low-pressure refrigerant gas to the refrigerant ejection port 15. For example, the compressor 20 has an orbiting scroll (not illustrated) connected to a drive shaft rotated by the electric motor 30 and a fixed scroll (not illustrated) fixed to the housing 10.

The electric motor 30 has a stator (not illustrated) that generates an AC magnetic field by AC current supplied from the motor control device 40, a rotor (not illustrated) rotated by magnetic force received from an AC magnetic field, and a drive shaft (not illustrated) connecting the rotor to the compressor 20. The electric motor 30 rotates the drive shaft and thereby drives the compressor 20.

The motor control device 40 controls the rotational rate of the electric motor 30 and thereby performs rotation control on the compressor 20. For example, the motor control device 40 performs, for example, control to convert a DC voltage supplied from a high-voltage power supply into an AC voltage in order to drive the electric motor 30. The motor control device 40 is connected to an engine control unit (ECU) via a communication line for control of an on-vehicle air conditioner, transmits and receives a control signal to and from the ECU, and controls AC power applied to the electric motor 30 based on the control signal. The motor control device 40 has a control board (electric compressor control board) 50 (see Fig. 2) on which various elements for controlling the electric motor 30 are mounted, as described later. For example, an intelligent power module (not illustrated) or the like having UVW output terminals for outputting three-phase alternating current to the electric motor 30 are mounted on the control board 50.

The vehicle electric system including a microcomputer or the like mounted on the control board 50 of the motor control device 40 is operated by power supplied from an on-vehicle battery. The voltage supplied from the on-vehicle battery significantly differs in value from the voltage of the high-voltage power supply used for driving the electric motor 30. If the high voltage used for driving the electric motor 30 is applied to another electric system such as the on-vehicle battery system, this will lead to a failure. Thus, in the control board 50, a low voltage system (the primary-side circuit) that is the on-vehicle battery system and a high-voltage system (the secondary-side circuit) that is the high-voltage power supply system are insulated from each other.

Next, the control board 50 according to the present embodiment will be described with reference to the drawings.

Fig. 2 illustrates a side view of a part of the control board 50 according to the present embodiment when viewed in the Y-axis direction. That is, in Fig. 2, a region of a part of the control board 50 according to the present embodiment is illustrated as an example.

As illustrated in Fig. 2, the control board 50 is a multi-layer board in which a plurality of substrates are stacked and laminated on each other. Although a four-layer board in which a first layer 50a, an intermediate layer 50b formed of two layers of substrates, and a substrate of a fourth layer 50c are laminated is illustrated as an example in the present embodiment, the number of layers laminated is not limited to this example and can be any number as long as it is two or greater.

The control board 50 has a first layer 50a on which a first element is mounted and an n-th layer (n=4) 50c on which a second element is mounted. Although an insulating IC 51 and an insulating transformer 52 are illustrated as an example of the first element and the second element, respectively, in the present embodiment, the invention is not limited to this example. The first element and the second element can be any electronic components without being limited thereto. For example, the first element and the second element may be insulating elements illustrated as an example in the present embodiment. Further, in terms of suppressing vibration, a relatively large electronic component is preferable.

The insulating IC 51 and the insulating transformer 52 are mounted so as to at least partially overlap with each other in planar view. For example, the insulating IC 51 and the insulating transformer 52 are arranged on the Z-axis perpendicular to the surface of the control board 50.

In Fig. 2, the insulating IC 51 is mounted on the front face side of the control board 50, that is, on the front face side of the first layer 50a, and the insulating transformer 52 is mounted on the back face side of the control board 50, that is, on the back face side of the fourth layer 50c. Herein, the substrate on which the insulating IC 51 is mounted is not limited to the first layer 50a. Further, the face on which the insulating IC 51 is provided may be the front face or may be the back face. Further, the substrate on which the insulating transformer 52 is mounted is not limited to the fourth layer 50c. Further, the face on which the insulating transformer 52 is mounted may be the front face or may be the back face. For example, at least any one of the insulating IC 51 and the insulating transformer 52 may be provided to the intermediate layer 50b. In such a case, the intermediate layer 50b will be arranged with a space where the element is mounted. Further, the meaning of the multi-layer board includes not only a case where a plurality of substrates are stacked on each other without any gap as illustrated in Fig. 2 but also a case where a plurality of substrates are laminated with a space between each other.

Board fixing holes 60 for attaching and fixing the control board 50 to the housing 10 (see Fig. 1) are provided in the control board 50. The board fixing holes 60 are preferably provided near the insulating IC 51 and the insulating transformer 52. Because the board fixing holes 60 are provided at such positions, the effect of suppressing vibration can be enhanced. For example, the control board 50 is fixed to the housing 10 by fastening bolts (not illustrated) through the board fixing holes 60.

Fig. 3 illustrates a plan view of the first layer (front face substrate) of the control board 50. In Fig. 3, the insulating IC 51 is arranged in the middle. In the following, the center of the insulating IC 51 is defined as the origin of the XYZ-coordinate system, the positive side on the X-axis is expressed as the right, the negative side on the X-axis is expressed as the left, the positive side on the Y-axis is expressed as the upper, and the negative side on the Y-axis is expressed as the lower.

For example, the insulating IC 51 is a microcomputer configured to control the electric motor 30 that drives the compressor 20. In Fig. 3, the primary-side circuit is arranged in the lower region with respect to the insulating IC 51. Further, the secondary-side circuit is arranged in the upper region with respect to the insulating IC 51. As described above, a higher voltage is applied to the secondary-side circuit than to the primary-side circuit.

In Fig. 3, for example, power supply patterns are provided in the right region with respect to the insulating IC 51. For example, the power supply patterns include a primary-side power supply pattern 53a provided in the lower right region and a secondary-side power supply pattern 53b provided in the upper right region with respect to the insulating IC.

The primary-side power supply pattern 53a and the secondary-side power supply pattern 53b are connected by one or a plurality of capacitors (noise suppression elements). In Fig. 3, a case where the primary-side power supply pattern 53a and the secondary-side power supply pattern 53b are connected by capacitors 55a, 55b, 55c connected in series is illustrated as an example.

A first terminal P1 of the primary-side circuit of the insulating IC 51 is connected to the primary-side power supply pattern 53a. Further, a fifth terminal P5 of the secondary-side circuit of the insulating IC 51 is connected to the secondary-side power supply pattern 53b. Further, other terminals of the insulating IC 51 are connected to predetermined patterns, respectively. Note that, in Fig. 3, illustration of patterns to which other terminals are connected is omitted from the half way thereof.

In the first layer 50a, ground patterns are arranged on the left side of the insulating IC 51. For example, the ground patterns include a primary-side ground pattern 56a provided in the left lower region and a secondary-side ground pattern 56b provided in the left upper region with respect to the insulating IC 51.

The primary-side ground pattern 56a and the secondary-side ground pattern 56b are connected by one or a plurality of capacitors (noise suppression elements) connected in series. In Fig. 3, a case where the primary-side ground pattern 56a and the secondary-side ground pattern 56b are connected by three capacitors 57a, 57b, 57c connected in series is illustrated as an example. In such a way, by connecting the capacitors (noise suppression elements) 57a, 57b, 57c over areas between different ground patterns, noise generated from the control board 50 can be reduced.

A fourth terminal P4 of the primary-side circuit of the insulating IC is connected to the primary-side ground pattern 56a. An eighth terminal P8 of the secondary-side circuit of the insulating IC is connected to the secondary-side ground pattern 56b.

As described above, the control board 50 has noise suppression elements connected to wiring patterns to which the insulating IC 51 is connected.

Fig. 4 illustrates a plan view of respective layers forming the intermediate layer 50b. That is, in the present embodiment, the second layer and the third layer corresponding to the intermediate layer 50b have the same pattern configuration. The X-axis, Y-axis, Z-axis illustrated in Fig. 4 correspond to the X-axis, Y-axis, Z-axis illustrated in Fig. 3, respectively. The primary-side ground pattern 58a and the secondary-side ground pattern 58b are provided to the intermediate layer 50b. The primary-side ground pattern 58a is connected to the primary-side ground pattern 56a provided to the first layer 50a. Similarly, the secondary-side ground pattern 58b is connected to the secondary-side ground pattern 56b provided to the first layer 50a. In the intermediate layer 50b illustrated in Fig. 4, for better view of the positional relationship between the insulating IC 51 provided to the first layer 50a and the capacitors 55a to 55c and 57a to 57c, these elements are illustrated by dotted lines.

Fig. 5 illustrates a plan view of the fourth layer (back face substrate) 50c of the control board 50. The X-axis, Y-axis, Z-axis illustrated in Fig. 5 correspond to the X-axis, Y-axis, Z-axis illustrated in Fig. 3, respectively. In Fig. 5, the insulating transformer 52 is arranged in the middle of the fourth layer 50c. The insulating transformer 52 is an element having eight elements, and predetermined patterns are connected to respective terminals. In Fig. 5, illustration of patterns to which respective terminals are connected is omitted from the half way thereof.

A plurality of ground patterns are provided in the fourth layer 50c. For example, the ground patterns are provided to the primary side and the secondary side of the insulating transformer 52, respectively. For example, the ground patterns include a primary-side ground pattern 59a provided in the right lower region with respect to the insulating transformer 52, a primary-side ground pattern 59b provided in the left lower region with respect to the insulating transformer 52, a secondary-side ground pattern 59c provided in the right upper region with respect to the insulating transformer 52, and a secondary-side ground pattern 59d provided in the left upper region with respect to the insulating transformer 52.

The primary-side ground patterns 59a and 59c are connected to the primary-side ground pattern 58a provided in the intermediate layer 50b. That is, the primary-side ground patterns 59a, 59b are connected to the primary-side ground pattern 56a of the first layer 50a through the primary-side ground pattern 58a of the intermediate layer 50b. That is, the primary-side ground patterns 56a, 58a, 59a, 59b form a common pattern and have the same potential.

In the same manner, the secondary-side ground patterns 59c and 59d are connected to the secondary-side ground pattern 58b provided in the intermediate layer 50b. That is, the secondary-side ground patterns 59c, 59d are connected to the secondary-side ground pattern 56b of the first layer 50a through the secondary-side ground pattern 58b of the intermediate layer 50b. That is, the secondary-side ground patterns 56b, 58b, 59c 59d form a common pattern and have the same potential.

In the fourth layer 50c, the primary-side ground pattern 59a and the secondary-side ground pattern 59c may be connected by one or a plurality of capacitors (noise suppression elements) connected in series. For example, in Fig. 5, lands and a pattern 62a for connecting the primary-side ground pattern 59a and the secondary-side ground pattern 59c via three capacitors are formed.

Similarly, the primary-side ground pattern 59b and the secondary-side ground pattern 59d may be connected by one or a plurality of capacitors (noise suppression elements) connected in series. For example, in Fig. 5, lands and a pattern 62b for connecting the primary-side ground pattern 59b and the secondary-side ground pattern 59d via three capacitors are formed.

In such a way, because the lands and the patterns 62a, 62b are formed, it is possible to easily mount an additional capacitor, which is a noise suppression element, in accordance with the noise occurrence condition or the like.

As described above, the control board 50 according to the present embodiment achieves the following effects and advantages.

The control board 50 is a multi-layer board including the first layer 50a on which the insulating IC (first element) 51 is mounted and the fourth layer on which the insulating transformer (second element) 52 is mounted, and the insulating IC 51 and the insulating transformer 52 are mounted so as to at least partially overlap with each other in the planar view.

This enables a vibration-resistant structure and can suppress vibration.

Insulating elements tend to be larger in size. The insulating IC 51 and the insulating transformer 52, which are such relatively large elements, are mounted so as to at least partially overlap with each other in the planar view, and thereby the vibration suppression effect can be further enhanced.

The control board 50 includes the primary-side ground pattern 56a provided in the first layer 50a and the primary-side ground patterns 59a, 59b provided in the fourth layer 50c, and these primary-side ground patterns 56a, 59a, 59b form an electrically connected common ground pattern. Furthermore, the control board 50 includes the secondary-side ground pattern 56b provided in the first layer 50a and the secondary-side ground pattern 59c, 59d provided in the fourth layer 50c, and these secondary-side ground patterns 56b, 59c, 59d form an electrically connected common ground pattern. The capacitors (noise suppression elements) 57a to 57c connected to these common ground patterns are mounted on the first layer 50a.

Accordingly, the noise generated from components, wirings, or the like provided to the control board 50 can be reduced. In particular, noise suppression against self-noise is needed around a circuit requiring insulation. According to the present embodiment, noise suppression elements can be arranged near the insulating IC 51 and the insulating transformer 52. Accordingly, the insulating transformer 52 provided to the fourth layer 50c can also obtain the effect of the noise suppression element provided to the first layer 50a, and this enables a reduction in the board area and a reduction in costs.

Instead of or in addition to the ground patterns described above, the power supply patterns connected to the insulating IC 51 and the insulating transformer 52 may form a common pattern. A noise suppression element connected to the commonly formed power supply pattern may be mounted on at least one of the first layer 50a and the fourth layer 50c. In such a way, the same advantage as in the case of a ground pattern can also be obtained by forming power supply patterns as a common pattern and installing a noise suppression element to the power supply patterns. The noise reduction effect can be enhanced by connecting noise suppression elements, for example, capacitors to both the commonly formed ground pattern and the commonly formed power supply pattern.

Since the board fixing holes 60 are provided in the control board 50, the control board 50 can be fixed to the housing 10 of the electric compressor 100 via the board fixing holes 60. This can suppress vibration and improve the board strength.

Although the control board 50 and the electric compressor 100 of the present disclosure have been described above with reference to one embodiment, the technical scope of the present disclosure is not limited to the scope described in the above embodiment. Various modification or improvement can be applied to the above embodiment in the scope not departing from the spirit of the present disclosure, and forms to which such modification or improvement is applied are also included in the technical scope of the present disclosure.

For example, although the case where the insulating IC 51 and the insulating transformer 52 are arranged so as to overlap with each other on the Z-axis has been described as an example in Fig. 3, the disclosure is not limited to this example. For example, as illustrated in Fig. 6 as an example of another embodiment, the insulating IC (first element) 51 and the insulating transformer (second element) 52 can be arranged such that a line Z' parallel to the Z-axis perpendicular to the surface of a control board 50' penetrates through a part of these elements. That is, the insulating IC (first element) 51 and the insulating transformer (second element) 52 can be mounted so as to at least partially overlap with each other in the planar view, and the degree of overlapping or the region of overlapping is not particularly limited. Further, some of solder lands each formed to a through-hole in which a terminal of an element is inserted (solder lands each formed so as to surround a through-hole) may be arranged so as to overlap with each other.

The electric compressor control board and the electric compressor according to the embodiment described above are understood as follows, for example.

An electric compressor control board (50, 50') according to the first aspect of the present disclosure is a multi-layer board including a first layer (50a) on which a first element (51) is mounted and an n-th layer (n is an integer of two or greater) (50c) on which a second element (52) is mounted, and the first element and the second element are mounted so as to at least partially overlap with each other in planar view.

According to the electric compressor control board of the present disclosure, since the first element and the second element are mounted so as to at least partially overlap with each other in the planar view, this enables a vibration-resistant structure and can suppress vibration.

In the electric compressor control board according to the second aspect of the present disclosure, each of the first element and the second element may be an insulating element in the first aspect.

Insulating elements tend to be larger in size. Such relatively large insulating elements are mounted so as to at least partially overlap with each other in the planar view, and thereby the vibration suppression effect can be enhanced.

The insulating element refers to an element in which the input side and the output side are insulated from each other inside the element.

In the first aspect or the second aspect, the electric compressor control board according to the third aspect of the present disclosure may include a noise suppression element (55a to 55c, 57a to 57c) connected to a wiring pattern (53a, 53b, 56a, 56b) to which at least one of the first element and the second element is connected.

According to the electric compressor control board of the present disclosure, since a noise suppression element is provided, the noise generated from components, wiring patterns, or the like provided to the electric compressor control board can be reduced. Furthermore, the first element and the second element are mounted so as to at least partially overlap with each other in the planar view. In other words, the first element and the second element are provided relatively close to each other interposing the board. Accordingly, the first element and the second element can share the effect of the noise suppression element. This enables a reduction in the board area and a reduction in costs.

In the first aspect or the second aspect, the electric compressor control board according to the fourth aspect of the present disclosure may include: a first ground pattern (56a, 56b) provided in the first layer; and an n-th ground pattern (59a to 59b, 59c to 59d) provided in the n-th layer, the first ground pattern and the n-th ground pattern may form an electrically connected common ground pattern, and a noise suppression element (57a to 57c) connected to the common ground pattern may be mounted on at least one of the first layer and the n-th layer.

According to the electric compressor control board of the present disclosure, both the first element and the second element can obtain the effect of the noise suppression element. In such a way, since the first element and the second element can share the noise suppression element, this enables a reduction in the board area and a reduction in costs.

In the first aspect or the second aspect, the electric compressor control board according to the fifth aspect of the present disclosure may include: a first power supply pattern (53a, 53b) provided in the first layer; and an n-th power supply pattern provided in the n-th layer, the first power supply pattern and the n-th power supply pattern may form an electrically connected common power supply pattern, and a noise suppression element connected to the common power supply pattern may be mounted on at least one of the first layer and the n-th layer.

According to the electric compressor control board of the present disclosure, both the first element and the second element can obtain the effect of the noise suppression element. In such a way, since the first element and the second element can share the noise suppression element, this enables a reduction in the board area and a reduction in costs.

In the electric compressor control board according to the sixth aspect of the present disclosure, a board fixing hole (60) may be provided in any one of the first aspect to the fifth aspect.

According to the electric compressor control board of the present disclosure, the control board can be fixed to the housing of the electric compressor via the board fixing holes. This can suppress vibration and improve the board strength.

An electric compressor (100) of the present disclosure includes: an electric motor (30); a compressor (20) rotated by output of the electric motor; and a motor control device (40) configured to perform drive control on the electric motor, and the motor control device includes the electric compressor control board (50, 50') according to any one of the first aspect to the sixth aspect.

### [Reference Signs List]

- 10: housing
- 20: compressor
- 30: electric motor
- 40: motor control device
- 50: control board (electric compressor control board)
- 50a: first layer
- 50b: intermediate layer
- 50c: fourth layer (n-th layer)
- 51: insulating IC (first element)
- 52: insulating transformer (second element)
- 53a: primary-side power supply pattern (first power supply pattern)
- 53b: secondary-side power supply pattern (first power supply pattern)
- 55a: capacitor (noise suppression element)
- 55b: capacitor (noise suppression element)
- 55c: capacitor (noise suppression element)
- 56a: primary-side ground pattern (first ground pattern)
- 56b: secondary-side ground pattern (first ground pattern)
- 57a: capacitor (noise suppression element)
- 57b: capacitor (noise suppression element)
- 57c: capacitor (noise suppression element)
- 58a: primary-side ground pattern
- 58b: secondary-side ground pattern
- 59a: primary-side ground pattern (n-th ground pattern)
- 59b: primary-side ground pattern (n-th ground pattern)
- 59c: secondary-side ground pattern (n-th ground pattern)
- 59d: secondary-side ground pattern (n-th ground pattern)
- 60: board fixing hole
- 100: electric compressor

## Claims

1. An electric compressor control board being a multi-layer board comprising a first layer on which a first element is mounted and an n-th layer (n is an integer of two or greater) on which a second element is mounted,
wherein the first element and the second element are mounted so as to at least partially overlap with each other in planar view.

2. The electric compressor control board according to claim 1, wherein each of the first element and the second element is an insulating element.

3. The electric compressor control board according to claim 1 or 2 further comprising a noise suppression element connected to a wiring pattern to which at least one of the first element and the second element is connected.

4. The electric compressor control board according to claim 1 or 2 further comprising:
a first ground pattern provided in the first layer; and
an n-th ground pattern provided in the n-th layer,
wherein the first ground pattern and the n-th ground pattern form an electrically connected common ground pattern, and
wherein a noise suppression element connected to the common ground pattern is mounted on at least one of the first layer and the n-th layer.

5. The electric compressor control board according to claim 1 or 2 further comprising:
a first power supply pattern provided in the first layer; and
an n-th power supply pattern provided in the n-th layer,
wherein the first power supply pattern and the n-th power supply pattern form an electrically connected common power supply pattern, and
wherein a noise suppression element connected to the common power supply pattern is mounted on at least one of the first layer and the n-th layer.

6. The electric compressor control board according to claim 1 or 2, wherein a board fixing hole is provided.

7. An electric compressor comprising:
an electric motor;
a compressor rotated by output of the electric motor; and
a motor control device configured to perform drive control on the electric motor,
wherein the motor control device comprises the electric compressor control board according to claim 1 or 2.
